# EUROPEAN PATENT APPLICATION

(11) **EP 0 810 437 A1**
(43) Date of publication of application: **03.12.1997**
(21) Application number: 96303857.5
(22) Date of filing: 29.05.1996
(51) Int. Cl.: G01N 35/10, B01F 13/00

(54) **Agitator for an automatic analyzer and an automatic analyzer comprising same**

(71) Applicant: MITSUBISHI CORPORATION, Chiyoda-ku Tokyo 100 (JP)
(72) Inventor: Fujioka, Hidehiko, c/o Mitsubishi Corporation, Tokyo (JP)
(74) Representative: Baverstock, Michael George Douglas

(57) **Abstract**

An agitator for an automatic analyzer which does not require the use of washing water can reduce the cost of analyzing operations. Such an agitator for an automatic analyzer for automatically feeding a specimen and a reagent into a reaction container, stirring them in the container and carrying out an optical analysis of the specimen comprises a stirring member (200) which stays in the reaction container until the analyzing operation is over.

## Description

This invention relates to an agitator for an automatic analyzer that automatically feeds a specimen and a reagent into a reaction container, stirs them in the container and carries out an optical analysis of the specimen. An automatic analyzer provided with an agitator according to the invention may suitably find applications in the field of biochemical analysis, immunological analysis and physicochemical analysis.

For screening a large number of specimens for a plurality of check items in a chemical analysis of blood, urine or environmentally contaminated water, the specimens have to be efficiently stirred with a reagent until they are completely mixed with each other.

A known agitator for an automatic analyzer disclosed in Japanese Utility Model Publication No. 1-31305 comprises a rotatable stirrer rod and a stirrer plate secured to the front end of the rod. The stirrer rod is introduced into a reaction container for each stirring operation and retracted out of the container after the operation so that it may be washed and got ready for the next cycle.

Other agitators comprising a stirrer rod are disclosed in Japanese Utility Model Publications Nos. 62-29961 and 63-14904. With either of these agitators, the stirrer rod is also introduced into a reaction container containing a specimen and a reagent solution and operated for axial rotation, eccentric rotation, vertical motion, intermittent motion and other agitating motions. After the end of the operation it is pulled out of the reaction container and washed to get ready for the next cycle.

With any of the agitators disclosed in Japanese Utility Model Publications Nos. 1-31305, 62-29961 and 63-14904, the stirrer rod has to be washed, consuming a large amount of washing water for each operation. Such washing water needs to be highly pure and is obtainable only by distillation or di-ionization thus making the analyzing operation costly.

Additionally, as the washed stirrer rod is introduced into the reaction container, it may inevitably bring some water with it into the container so as to give rise to problems of cross contamination and reduced accuracy of the test results due to changed volume of the reaction solution.

Finally, any of the above described known agitators has to be provided with a mechanism for driving the stirrer rod into and out of the reaction container, a mechanism for washing the rod, a washing tank, a pump for washing water and other peripheral devices, and also the whole device with the agitator is large and costly.

In view of the above identified problems and other problems of known agitators, it is therefore an object of the present invention to provide an agitator that does not require the use of washing water and hence can reduce the cost of the analyzing operation.

Another object of the present invention is to provide an agitator whose stirring member does not need to be driven into and out of the reaction container and, therefore, is free from the problems of cross contamination due to washing water being brought into the container with it and of reduced accuracy of the test results due to the changed volume of the reaction solution. An automatic analyzer provided with such an agitator is then highly reliable for any analysis.

Still another object of the present invention is to provide an agitator that does not require a mechanism for driving the stirrer rod into and out of the reaction container, a mechanism for washing the rod, a washing tank, a pump for washing water and other peripheral devices. Such an agitator is then compact and can be manufactured at low cost.

According to the invention, the above objects are achieved by providing an agitator for an automatic analyzer for automatically feeding a specimen and a reagent into a reaction container, stirring them in the container and carrying out an optical analysis of the specimen, characterized in that it comprises a stirring member which stays in the reaction container until the analyzing operation is over.

In a preferred embodiment, the stirring member is kept in the reaction container until the latter is disposed of as waste. In another preferred embodiment, the reaction container is automatically supplied and disposed of as waste. In still another preferred embodiment, the stirring member has a stirring plane with a contour substantially matching the horizontal cross section of the reaction container. In still another preferred embodiment, the stirring plane of the stirring member is provided with through bores to allow liquid to pass therethrough. In a further embodiment, the stirring member is linked with a drive unit by way of a slender rod member. Preferably, the stirring member is linked with the drive unit by way of a panel member extending in the direction along which the light beam passes in the reaction container. Preferably, the stirring member has a vertical cross section greater in an area for allowing an analyzing light beam to pass than in an area for not allowing the analyzing light beam to pass in the reaction container. Preferably, the stirring member has a spiral profile. Preferably, the stirring member is a vertically disposed flat panel provided with through bores in an area for allowing an analyzing light beam to pass therethrough in the reaction container. Preferably, the stirring member is temperature controlled when it is introduced into the reaction container. Preferably, the stirring member operates for agitation by ultrasonic vibration. Preferably, the stirring member is automatically controlled for stirring operation depending on the test items of an analysis cycle.

According to another aspect of the invention, there is provided an agitator for an automatic analyzer for automatically feeding a specimen and a reagent into a reaction container, stirring them in the container and carrying out an optical analysis of the specimen, characterized in that it comprises a disposable stirring member.

With an agitator for an automatic analyzer according to the invention, the stirring member is not washed for reuse but disposed of as waste once it is used so that a new stirring member is always used for the agitator.

In the drawings:
FIG. 1 is a schematic perspective view of a first embodiment of stirring member of an agitator according to the invention.
FIG. 2 is a plan view of an automatic analyzer comprising the embodiment of FIG. 1.
FIG. 3 is a schematic perspective view of a reaction container to be used with the embodiment of FIG. 1.
FIG. 4 is a schematic sectional view of a mechanism for vertically driving the embodiment of FIG. 1.
FIG. 5 is a schematic perspective view of a second embodiment of stirring member of an agitator according to the invention.
FIG. 6 is a schematic perspective view of a third embodiment of stirring member of an agitator according to the invention.
FIG. 7 is a schematic perspective view of a fourth embodiment of stirring member of an agitator according to the invention.
FIG. 8 is a schematic perspective view of a fifth embodiment of stirring member of an agitator according to the invention.
FIG. 9 is a schematic perspective view of a sixth embodiment of stirring member of an agitator according to the invention.
FIG. 10 is a schematic perspective view of a seventh embodiment of stirring member of an agitator according to the invention.
FIG. 11 is a schematic perspective view of an eighth embodiment of stirring member of an agitator according to the invention.
FIG. 12 is a schematic perspective view of a ninth embodiment of stirring member of an agitator according to the invention.

The present invention will now be described by referring to the accompanying drawings that illustrate preferred embodiments of the invention.

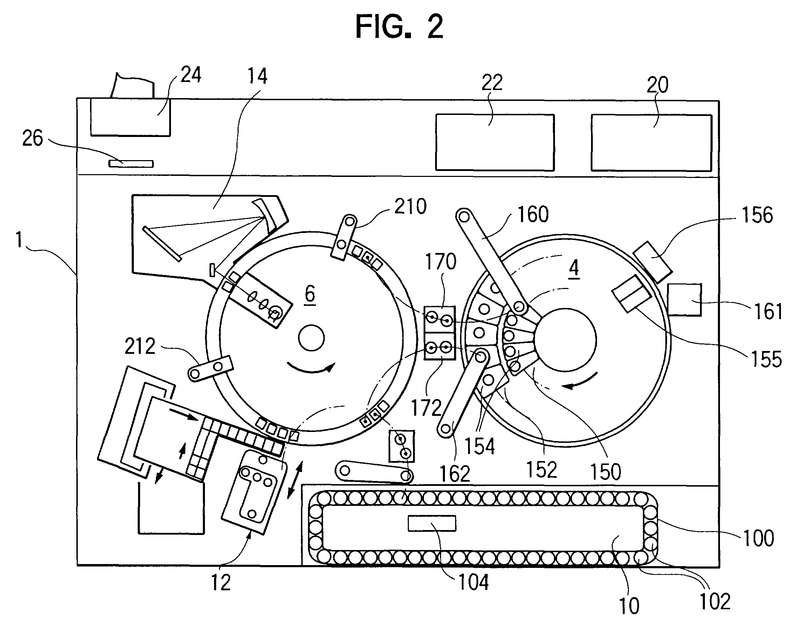

Referring firstly to FIG. 2 schematically illustrating an automatic analyzer comprising a first embodiment of an agitator according to the invention, the automatic analyzer 1 comprises a reagent table 4 and a reaction bath table 6 arranged at the center thereof. Additionally, there are an automatic sampler 10 for automatically storing and feeding specimens arranged along the access side, a reaction container supplying/disposing section 12 located next to the automatic sampler and a spectrophotometer 14 arranged along the remote side of the automatic analyzer 1. Behind the automatic analyzer 1, there are arranged a control keyboard 20 provided with a number of keys (not shown) for entering parameters for controlling the operation of the automatic analyzer 1, an LCD display 22 for displaying the status of the on-going analyzing operation and other operations, a printer 24 for printing the result data obtained by the analyzing operations and a floppy disc drive 26 for entering system programs and operation parameters and recording the result data obtained by the analyzing operations.

The automatic sampler 10 has an endless conveyor 100 running along a substantially rectangular track and carrying thereon fifty sample tubes 102 provided with respective bar codes. A first bar code reader 104 is arranged inside the track of the endless conveyor 100 and designed to read the bar code of the sample tube 102 passing a predetermined position on the track.

The reagent table 4 carries twenty four reagent bottles 154 provided with respective bar codes and arranged in an inner zone 150 and the same number of reagent bottles 154 also provided with respective bar codes and arranged in an outer zone 152, and rotates clockwise. Along and outside the outer periphery of the reagent table 4, there is a bottle handler 161 for lifting the reagent bottles 154 in the outer zone 152 in order to make the corresponding reagent bottles 154 in the inner zone visible and their bar codes are readable with a second bar code reader 156. Along and outside the outer periphery of the reagent table 4, additionally, there are a first reagent pipette 162 for aspirating the reagent from a reagent bottle 154 in the outer zone 152 and a second reagent pipette 160 for aspirating the reagent from a reagent bottle 154 in the inner zone 150. Along and outside the outer periphery of the reagent table 4, still additionally, there are first and second pipette head washing troughs 170 and 172 respectively arranged in the middle of the track of the pipette head 164 of the first reagent pipette 162 and the track of the pipette head 166 of the second reagent pipette 160.

The reaction bath table 6 carries along its outer peripheral edge a reaction container 202 containing a first embodiment of disposable stirring member 200 and rotates counterclockwise. Along and outside the outer periphery of the reaction bath table 6, there are a supplying/disposing section 12, a spectrophotometer 14 and first and second units 210 and 212 for vertically driving the stirring members 200 in the reaction containers 202 that are brought to the respective positions.

The reaction container supplying/disposing section 12 is designed to contain ten stacked reaction container magazines, each in turn containing a total of 100 reaction containers 202 arranged in an array of 10 rows by 10 columns, so that it supplies sequentially the reaction containers 202 containing respective stirring members 200 to the reaction bath table 6 and, after the completion of the respective cycles of the analyzing operation, retrieves sequentially the reaction containers 202 for waste disposal.

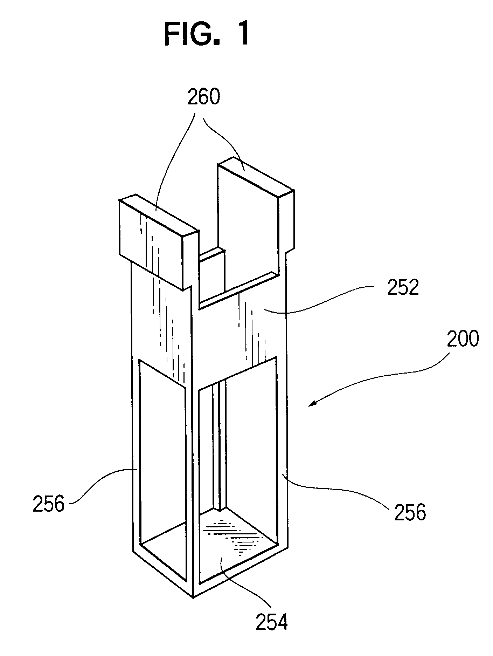

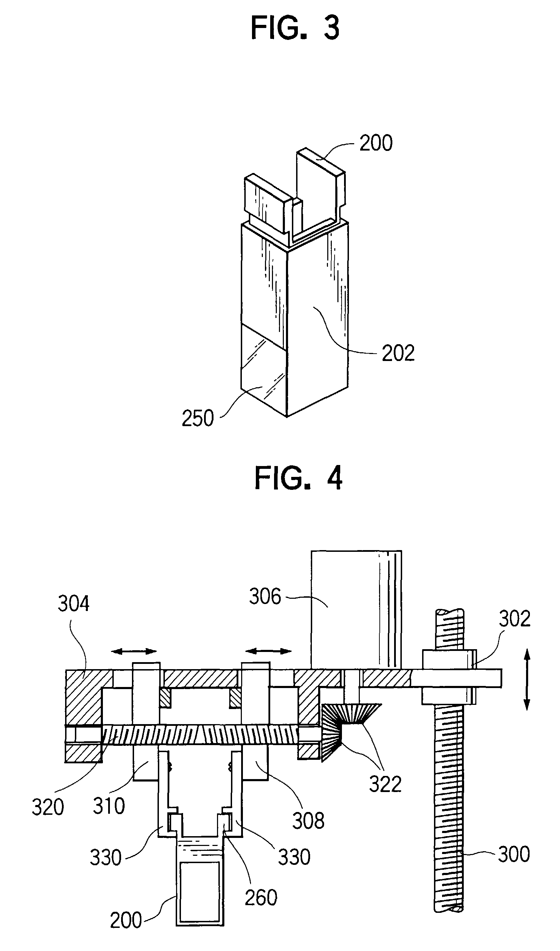

As shown in FIG. 3, each of the reaction containers 202 has the form of a rectangular parallelepiped which is open at the top and has a pair of oppositely disposed lateral walls that are provided at a lower part thereof with respective light passing sections 250. As seen from FIGS. 1 and 3, the stirring member 200, which is arranged in the container 202 in FIG. 3, also has a rectangularly parallelepipedic main body 252 whose bottom panel 254 is suspended by four holder bars 256, a pair of grip sections 260 being oppositely arranged on the top of the main body 252.

As shown in FIG. 4, the mechanism of the first unit 210 for vertically driving the stirring member (or that of the second unit 212 for vertically driving the stirring member) comprises a guide rail (not shown) for securing the levelness of the unit and a stirring arm plate 304 capable of vertically moving by means of operation of a vertical drive screw 300 capable of rotating clockwise and counterclockwise and a nut 302 engaged with the vertical drive screw 300 and secured to the stirring arm plate 304. The stirring arm plate 304 carries thereon a motor 306 and is provided with a pair of sliders 308 and 310. The sliders 308 and 310 are provided with respective internal threads that are in mesh with the thread of a slider drive screw 320 but reversely directed relative to each other. The slider drive screw 320 is driven by the motor 306 by way of bevel gears 322. The sliders 308 and 310 are provided at a lower part thereof with respective holder sections 330 so as to be engaged with the respective grip sections 260 of the stirring member 200. Thus, as the motor 306 is operated, it drives the slider drive screw 320 to rotate in a direction for bringing the sliders 308 and 310 closer or away from each other so that the stirring member 200 may be held by or released from the holder sections 330 of the sliders 308 and 310, whichever is appropriate. The stirring arm plate 304 and hence the sliders 308 and 310 move vertically as the vertical drive screw 300 is operated. The stirring motion of the stirring member 200 in terms of the track and the velocity of the motion is determined depending on the check items and is automatically controlled by a control unit (not shown).

As shown in FIG. 2, the spectrophotometer 14 is a known popular spectroscopic device utilizing a diffraction grating. A light beam emitted from a light source 350 passes through the light passing sections 250 of a lower part of the reaction container 202 mounted on the reaction bath table 6 and diffracted by the diffraction grating 360 before being detected by a light detecting device 352.

Other embodiments of stirring member will now be described below.

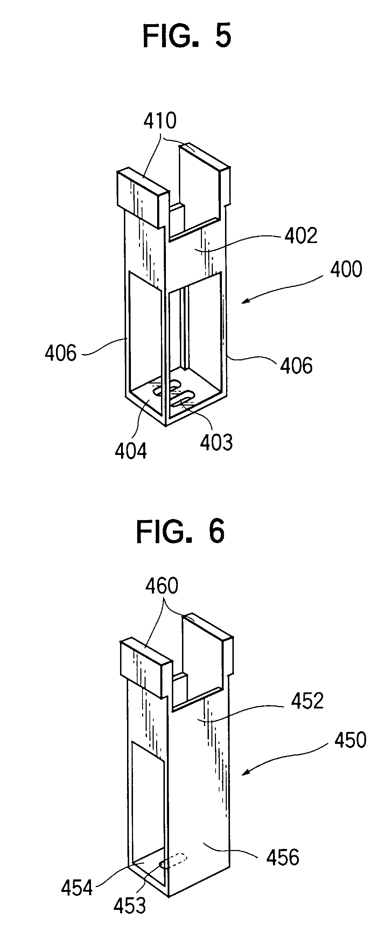

The second embodiment of stirring member 400 shown in FIG. 5 comprises a rectangularly parallelepipedic main body 402 which is provided with slots 403 and whose bottom panel 404 is suspended by four holder bars 406, a pair of grip sections 410 being oppositely arranged on the top of the main body 402. With this embodiment again, the stirring member 400 is moved vertically for the stirring operation.

The third embodiment of stirring member 450 shown in FIG. 6 comprises a rectangularly parallelepipedic main body 452 which is provided with slots 453 and whose bottom panel 454 is suspended by a pair of holder panels 456, a pair of grip sections 460 being oppositely arranged on the top of the main body 452. With this embodiment again, the stirring member 450 is moved vertically for the stirring operation.

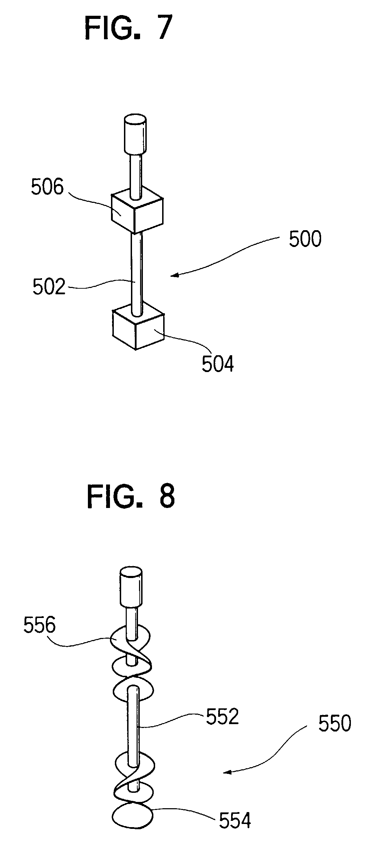

The fourth embodiment of stirring member 500 shown in FIG. 7 comprises a pillar member 502 which is provided with stirring projections 504 and 506 arranged respectively at the bottom and at a middle portion thereof. With this embodiment again, the stirring member 500 is moved vertically for the stirring operation.

The fifth embodiment of stirring member 550 shown in FIG. 8 comprises a pillar member 552 which is provided with stirring spiral screw blades 554 and 556 arranged respectively at the bottom and at a middle portion thereof. With this embodiment, the stirring member 550 is rotated for stirring operation and the light beam of the spectrophotometer 14 passes through the space between the stirring spiral screw blades 554 and 556. The spiral screw blades 554 and 556 are reversely directed so that those portions of the specimen found in upper and lower areas of the reaction container 202 are forced to flow towards the space between the stirring spiral screw blades 554 and 556 as the stirring member 550 rotates.

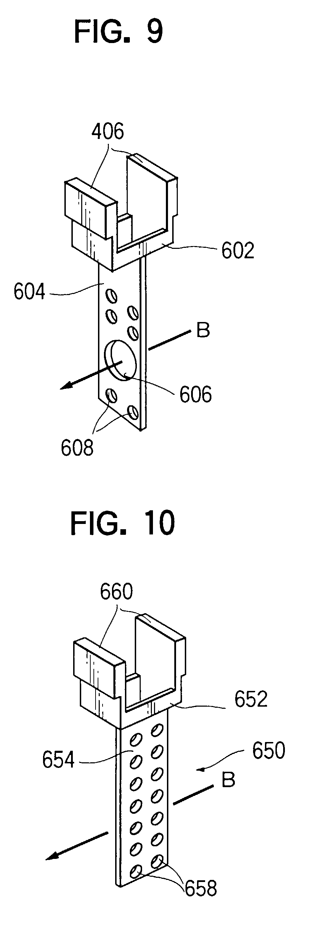

The sixth embodiment of stirring member 600 shown in FIG. 9 comprises a rectangularly parallelepipedic main body 602 suspending a stirring panel 604 which is provided with a large through bore 606 for allowing a light beam to pass therethrough and a plurality of small through bores 608, a pair of oppositely disposed grip sections 460 being arranged on the top of the main body 602. With this embodiment, the stirring member 600 is horizontally reciprocated in a direction perpendicular to the stirring panel 604 for the stirring operation.

The seventh embodiment of stirring member 650 shown in FIG. 10 comprises a rectangularly parallelepipedic main body 652 suspending a stirring panel 654 which is provided with a plurality of small through bores 658, a pair of oppositely disposed grip sections 660 being arranged on the top of the main body 662. With this embodiment, the stirring member 650 is horizontally reciprocated in a direction perpendicular to the stirring panel 604 for the stirring operation. The light beam B from the spectrophotometer 14 passes along the surfaces of the stirring panel 654.

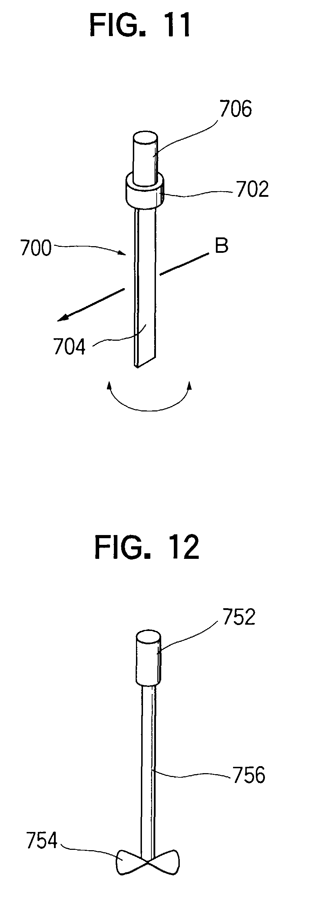

The eighth embodiment of stirring member 700 shown in FIG. 11 comprises a cylindrical body main 702 suspending a stirring panel 704 and supporting a cylindrical grip section 706 arranged on the top of the main body 702. With this embodiment, the stirring member 700 is vibrated by ultrasonic waves and, at the same time, rotated around its vertical axis for the stirring operation. The stirring panel 704 is stopped for spectrophotometry in such a way that it is in parallel with the light beam from the spectrophotometer 14.

The ninth embodiment of stirring member 750 shown in FIG. 12 comprises a cylindrical main body 752 suspending a pillar 754 that is provided at the bottom with a screw 754. With this embodiment, the stirring member 750 is rotated around its vertical axis for the stirring operation.

In another embodiment of the invention, the content of the reaction container is agitated by a disposable stirring member and, after the completion of a cycle of the stirring operation, the stirring member is taken out of the stirring member and disposed of as waste.

In another embodiment of the invention, the stirring member is not housed into the reaction container in advance but put into the container after it is brought to the agitator.

In a still another embodiment of the invention, after stirring the specimen and the reagent in the reaction container, the agitated solution is not directly subjected to spectrophotometry but is transferred to a photometric cell such as a flow cell for a subsequent spectrophotometric operation.

As described above, an agitator according to the invention does not require the use of washing water and hence can reduce the cost of an analyzing operation.

Additionally, an agitator according to the invention comprises a stirring member that does not need to be driven into and out of the reaction container and, therefore, is free from the problems of cross contamination due to the washing water brought into the container with it and of reduced accuracy of the test results due to the changed volume of the reaction solution. Thus, an automatic analyzer provided with such an agitator is then highly reliable for any analysis.

Still additionally, an agitator according to the invention does not require a mechanism for driving the stirrer rod into and out of the reaction container, a mechanism for washing the rod, a washing tank, a pump for washing water and other peripheral devices. Such an agitator is therefore compact and can be manufactured at low cost.

In particular, the stirring member of any of the first, second, third, sixth and seventh embodiments can agitate the specimen and the reagent by means of a nozzle for dispensing them so that the entire solution of the specimen and the reagent can be agitated while the reagent is being dispensed or immediately after it is dispensed. Thus an agitator comprising such a stirring member can effectively be used for applications where the initial reaction of the specimen and the reagent proceeds quickly such as in the case of latex immunoturbidimetric analysis.

## Claims

1. An agitator for an automatic analyzer for automatically feeding a specimen and a reagent into a reaction container, stirring them in the container and carrying out an optical analysis of the specimen, characterized in that it comprises a stirring member which stays in the reaction container until the analyzing operation is over.

2. An agitator for an automatic analyzer according to claim 1, characterized in that the stirring member is kept in the reaction container until the latter is disposed of as waste.

3. An agitator for an automatic analyzer according to claim 1, characterized in that the reaction container is automatically supplied and disposed of as waste.

4. An agitator for an automatic analyzer according to claim 1, characterized in that the stirring member has a stirring plane with a contour substantially matching the horizontal cross section of the reaction container.

5. An agitator for an automatic analyzer according to claim 4, characterized in that the stirring plane of the stirring member is provided with through bores to allow liquid to pass therethrough.

6. An agitator for an automatic analyzer according to claim 4, characterized in that the stirring member is linked with a drive unit by way of a slender rod member.

7. An agitator for an automatic analyzer according to claim 4, characterized in that the stirring member is linked with a drive unit by way of a panel member extending in the direction along which a light beam passes in the reaction container.

8. An agitator for an automatic analyzer according to claim 1, characterized in that the stirring member has a vertical cross section greater in an area for allowing an analyzing light beam to pass than in an area for not allowing the analyzing light beam to pass in the reaction container.

9. An agitator for an automatic analyzer according to claim 8, characterized in that the stirring member has a spiral profile.

10. An agitator for an automatic analyzer according to claim 8, characterized in that the stirring member is a vertically disposed flat panel provided with through bores in an area for allowing an analyzing light beam to pass therethrough in the reaction container.

11. An agitator for an automatic analyzer according to claim 1, characterized in that the stirring member is temperature controlled when it is introduced into the reaction container.

12. An agitator for an automatic analyzer according to claim 1, characterized in that the stirring member operates for agitation by ultrasonic vibration.

13. An agitator for an automatic analyzer according to claim 1, characterized in that the stirring member is automatically controlled for the stirring operation depending on the test items in an analysis cycle.

14. An agitator for an automatic analyzer for automatically feeding a specimen and a reagent into a reaction container, stirring them in the container and carrying out an optical analysis of the specimen, characterized in that it comprises a disposable stirring member.

15. An automatic analyzer for automatically feeding a specimen and a reagent into a reaction chamber, stirring them in the container and carrying out an optical analysis of the specimen characterised in that it is provided with an agitator according to any one of the preceding claims.
